# EUROPEAN PATENT APPLICATION

(11) **EP 4 444 017 A1**
(43) Date of publication of application: **09.10.2024**
(21) Application number: 24155665.3
(22) Date of filing: 05.02.2024
(51) Int. Cl.: H04W 74/0833, H04W 36/00, H04W 56/00

(54) **CONFIGURING AND USE OF RAR (RANDOM ACCESS RESPONSE) WINDOW INFORMATION FOR WIRELESS NETWORKS**

(30) Priority: 05.04.2023 US 202363494457 P
(71) Applicant: Nokia Technologies Oy, 02610 Espoo (FI)
(72) Inventor: KARABULUT, Umur, Munich (DE); SPAPIS, Panagiotis, Munich (DE); GOYAL, Sanjay, Denville, NJ (US); AWADA, Ahmad, Munich (DE)
(74) Representative: Nokia EPO representatives

(57) **Abstract**

A method includes receiving, by a user device from a network node, a random access response (RAR) window information for a RAR window for the target cell, the RAR window information including at least one of: an indication for the user device to resume data communication with a source cell after a RAR is received by the user device from the target cell within the RAR window, or an indication for the user device to perform the data communication with the source cell between at least two common search space (CSS) occasions within the RAR window; pausing, by the user device, the data communication with the source cell; and performing, by the user device, the data communication with the source cell based on the RAR window information.

## Description

### TECHNICAL FIELD

This description relates to wireless communications.

### BACKGROUND

A communication system may be a facility that enables communication between two or more nodes or devices, such as fixed or mobile communication devices. Signals can be carried on wired or wireless carriers.

An example of a cellular communication system is an architecture that is being standardized by the 3rd Generation Partnership Project (3GPP). A recent development in this field is often referred to as the long-term evolution (LTE) of the Universal Mobile Telecommunications System (UMTS) radio-access technology. E-UTRA (evolved UMTS Terrestrial Radio Access) is the air interface of 3GPP's Long Term Evolution (LTE) upgrade path for mobile networks. In LTE, base stations or access points (APs), which are referred to as enhanced Node AP (eNBs), provide wireless access within a coverage area or cell. In LTE, mobile devices, or mobile stations are referred to as user equipments (UE). LTE has included a number of improvements or developments. Aspects of LTE are also continuing to improve.

5G New Radio (NR) development is part of a continued mobile broadband evolution process to meet the requirements of 5G, similar to earlier evolution of 3G and 4G wireless networks. In addition, 5G is also targeted at the new emerging use cases in addition to mobile broadband. A goal of 5G is to provide significant improvement in wireless performance, which may include new levels of data rate, latency, reliability, and security. 5G NR may also scale to efficiently connect the massive Internet of Things (IoT) and may offer new types of mission-critical services. For example, ultra-reliable and low-latency communications (URLLC) devices may require high reliability and very low latency.

### SUMMARY

A method may include receiving, by a user device from a network node, a random access response (RAR) window information for a RAR window for the target cell, the RAR window information including at least one of: an indication for the user device to resume data communication with a source cell after a RAR is received by the user device from the target cell within the RAR window, or an indication for the user device to perform the data communication with the source cell between at least two common search space (CSS) occasions within the RAR window; pausing, by the user device, the data communication with the source cell; and performing, by the user device, the data communication with the source cell based on the RAR window information.

An apparatus includes at least one processor; and at least one memory including computer program code; the at least one memory and the computer program code configured to, with the at least one processor, cause the apparatus at least to: receive, by a user device from a network node, a random access response (RAR) window information for a RAR window for the target cell, the RAR window information including at least one of: an indication for the user device to resume data communication with a source cell after a RAR is received by the user device from the target cell within the RAR window, or an indication for the user device to perform the data communication with the source cell between at least two common search space (CSS) occasions within the RAR window; pause, by the user device, the data communication with the source cell; and perform, by the user device, the data communication with the source cell based on the RAR window information.

A method may include receiving, by a source network node associated with a source cell for a user device, a random access response (RAR) window information for a RAR window for a target cell associated with a target network node, the RAR window information including at least one of: an indication for the source network node to resume data communication with the user device after a RAR is received by the user device from the target cell within the RAR window, or an indication for the source network node to perform the data communication with the user device between at least two common search space (CSS) occasions within the RAR window; forwarding, by the source network node to the user device, the RAR window information; pausing, by the source network node, the data communication with the source cell; and performing, by the source network node, the data communication with the user device based on the RAR window information.

An apparatus includes at least one processor; and at least one memory including computer program code; the at least one memory and the computer program code configured to, with the at least one processor, cause the apparatus at least to: receive, by a source network node associated with a source cell for a user device, a random access response (RAR) window information for a RAR window for a target cell associated with a target network node, the RAR window information including at least one of: an indication for the source network node to resume data communication with the user device after a RAR is received by the user device from the target cell within the RAR window, or an indication for the source network node to perform the data communication with the user device between at least two common search space (CSS) occasions within the RAR window; forward, by the source network node to the user device, the RAR window information; pause, by the source network node, the data communication with the source cell; and perform, by the source network node, the data communication with the user device based on the RAR window information.

Other example embodiments are provided or described for each of the example methods, including: means for performing any of the example methods; a non-transitory computer-readable storage medium comprising instructions stored thereon that, when executed by at least one processor, are configured to cause a computing system to perform any of the example methods; and an apparatus including at least one processor, and at least one memory including computer program code, the at least one memory and the computer program code configured to, with the at least one processor, cause the apparatus at least to perform any of the example methods.

The details of one or more examples of embodiments are set forth in the accompanying drawings and the description below. Other features will be apparent from the description and drawings, and from the claims.

### BRIEF DESCRIPTION OF THE DRAWINGS

FIG. 1 is a block diagram of a wireless network according to an example embodiment.
FIG. 2A is a diagram illustrating operations of a 4-step random access (RACH) procedure according to an example embodiment.
FIG. 2B is a diagram illustrating operations of a 2-step random access (RACH) procedure according to an example embodiment.
FIG. 3 is a diagram illustrating an example of an interruption that may occur for the communication between a UE and a source-DU (S-DU).
FIG. 4 is a diagram illustrating more efficient use of resources of the RAR window based on the UE receiving a RAR window information from the source cell/S-DU including an indication for the UE to resume data communication with a source cell after a RAR is received by the UE from the target cell.
FIG. 5 is a diagram illustrating another example of a more efficient use of resources of the RAR window based on the UE receiving a RAR window information including an intermittent communication indication that instructs the UE to perform or resume communication with the source cell/S-DU in gaps between the CSS occasions.
FIG. 6 is a diagram illustrating another example of a more efficient use of resources of the RAR window based on the UE receiving a RAR window information including information indicating at least one user device-specific common search space (CSS) occasion, of a plurality of CSS occasions within the RAR window.
FIG. 7 is a flow chart illustrating operation of a user device (or UE) according to an example embodiment.
FIG. 8 is a flow chart illustrating operation of a network node according to an example embodiment.
FIG. 9 is a diagram illustrating L1/L2 Trigger Mobility (LTM) according to an example embodiment, for intra-DU case, where both serving cell and target cell are controlled or provided by the same Source DU (S-DU).
FIGs. 10A and 10B are a diagram illustrating L1/L2 Trigger Mobility (LTM) according to an example embodiment, for inter-DU case, where serving cell and target cell are controlled or provided by different DUs (S-DU and T-DU).
FIG. 11 is a block diagram of a wireless station or node (e.g., network node, user node or UE, relay node, or other node).

### DETAILED DESCRIPTION

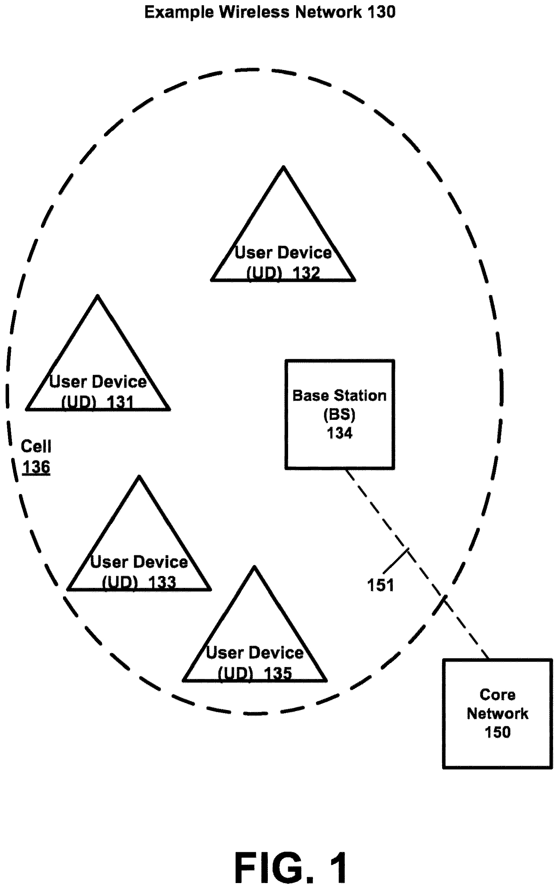

FIG. 1 is a block diagram of a wireless network 130 according to an example embodiment. In the wireless network 130 of FIG. 1, user devices 131, 132, 133 and 135, which may also be referred to as mobile stations (MSs) or user equipment (UEs), may be connected (and in communication) with a base station (BS) 134, which may also be referred to as an access point (AP), an enhanced Node B (eNB), a gNB or a network node. The terms user device and user equipment (UE) may be used interchangeably. A BS may also include or may be referred to as a RAN (radio access network) node, and may include a portion of a BS or a portion of a RAN node, such as (e.g., such as a centralized unit (CU) and/or a distributed unit (DU) in the case of a split BS or split gNB). At least part of the functionalities of a BS (e.g., access point (AP), base station (BS) or (e)Node B (eNB), gNB, RAN node) may also be carried out by any node, server or host which may be operably coupled to a transceiver, such as a remote radio head. BS (or AP) 134 provides wireless coverage within a cell 136, including to user devices (or UEs) 131, 132, 133 and 135. Although only four user devices (or UEs) are shown as being connected or attached to BS 134, any number of user devices may be provided. BS 134 is also connected to a core network 150 via a S1 interface 151. This is merely one simple example of a wireless network, and others may be used.

A base station (e.g., such as BS 134) is an example of a radio access network (RAN) node within a wireless network. A BS (or a RAN node) may be or may include (or may alternatively be referred to as), e.g., an access point (AP), a gNB, an eNB, or portion thereof (such as a /centralized unit (CU) and/or a distributed unit (DU) in the case of a split BS or split gNB), or other network node.

According to an illustrative example, a BS node (e.g., BS, eNB, gNB, CU/DU, ...) or a radio access network (RAN) may be part of a mobile telecommunication system. A RAN (radio access network) may include one or more BSs or RAN nodes that implement a radio access technology, e.g., to allow one or more UEs to have access to a network or core network. Thus, for example, the RAN (RAN nodes, such as BSs or gNBs) may reside between one or more user devices or UEs and a core network. According to an example embodiment, each RAN node (e.g., BS, eNB, gNB, CU/DU, ...) or BS may provide one or more wireless communication services for one or more UEs or user devices, e.g., to allow the UEs to have wireless access to a network, via the RAN node. Each RAN node or BS may perform or provide wireless communication services, e.g., such as allowing UEs or user devices to establish a wireless connection to the RAN node, and sending data to and/or receiving data from one or more of the UEs. For example, after establishing a connection to a UE, a RAN node or network node (e.g., BS, eNB, gNB, CU/DU, ...) may forward data to the UE that is received from a network or the core network, and/or forward data received from the UE to the network or core network. RAN nodes or network nodes (e.g., BS, eNB, gNB, CU/DU, ...) may perform a wide variety of other wireless functions or services, e.g., such as broadcasting control information (e.g., such as system information or on-demand system information) to UEs, paging UEs when there is data to be delivered to the UE, assisting in handover of a UE between cells, scheduling of resources for uplink data transmission from the UE(s) and downlink data transmission to UE(s), sending control information to configure one or more UEs, and the like. These are a few examples of one or more functions that a RAN node or BS may perform.

A user device or user node (user terminal, user equipment (UE), mobile terminal, handheld wireless device, etc.) may refer to a portable computing device that includes wireless mobile communication devices operating either with or without a subscriber identification module (SIM), including, but not limited to, the following types of devices: a mobile station (MS), a mobile phone, a cell phone, a smartphone, a personal digital assistant (PDA), a handset, a device using a wireless modem (alarm or measurement device, etc.), a laptop and/or touch screen computer, a tablet, a phablet, a game console, a notebook, a vehicle, a sensor, and a multimedia device, as examples, or any other wireless device. It should be appreciated that a user device may also be (or may include) a nearly exclusive uplink only device, of which an example is a camera or video camera loading images or video clips to a network. Also, a user node may include a user equipment (UE), a user device, a user terminal, a mobile terminal, a mobile station, a mobile node, a subscriber device, a subscriber node, a subscriber terminal, or other user node. For example, a user node may be used for wireless communications with one or more network nodes (e.g., gNB, eNB, BS, AP, CU, DU, CU/DU) and/or with one or more other user nodes, regardless of the technology or radio access technology (RAT).

In LTE (as an illustrative example), core network 150 may be referred to as Evolved Packet Core (EPC), which may include a mobility management entity (MME) which may handle or assist with mobility/handover of user devices between BSs, one or more gateways that may forward data and control signals between the BSs and packet data networks or the Internet, and other control functions or blocks. Other types of wireless networks, such as 5G (which may be referred to as New Radio (NR)), and/or 6G, may also include a core network.

In addition, the techniques described herein may be applied to various types of user devices or data service types, or may apply to user devices that may have multiple applications running thereon that may be of different data service types. New Radio (5G) development may support a number of different applications or a number of different data service types, such as for example: machine type communications (MTC), enhanced machine type communication (eMTC), Internet of Things (IoT), and/or narrowband IoT user devices, enhanced mobile broadband (eMBB), and ultra-reliable and low-latency communications (URLLC). Many of these new 5G (NR) - related applications may require generally higher performance than previous wireless networks.

IoT may refer to an ever-growing group of objects that may have Internet or network connectivity, so that these objects may send information to and receive information from other network devices. For example, many sensor type applications or devices may monitor a physical condition or a status, and may send a report to a server or other network device, e.g., when an event occurs. Machine Type Communications (MTC, or Machine to Machine communications) may, for example, be characterized by fully automatic data generation, exchange, processing and actuation among intelligent machines, with or without intervention of humans. Enhanced mobile broadband (eMBB) may support much higher data rates than currently available in LTE.

Ultra-reliable and low-latency communications (URLLC) is a new data service type, or new usage scenario, which may be supported for New Radio (5G) systems. This enables emerging new applications and services, such as industrial automations, autonomous driving, vehicular safety, e-health services, and so on. 3GPP targets in providing connectivity with reliability corresponding to block error rate (BLER) of 10-5 and up to 1 ms U-Plane (user/data plane) latency, by way of illustrative example. Thus, for example, URLLC user devices/UEs may require a significantly lower block error rate than other types of user devices/UEs as well as low latency (with or without requirement for simultaneous high reliability). Thus, for example, a URLLC UE (or URLLC application on a UE) may require much shorter latency, as compared to an eMBB UE (or an eMBB application running on a UE).

The techniques described herein may be applied to a wide variety of wireless technologies or wireless networks, such as 5G (New Radio (NR)), cmWave, and/or mmWave band networks, IoT, MTC, eMTC, eMBB, URLLC, 6G, etc., or any other wireless network or wireless technology. These example networks, technologies or data service types are provided only as illustrative examples.

At least in some example cases, a UE may be in one of multiple states (e.g., such as one of three Radio Resource Control (RRC) states) with respect to a network node or gNB. In an Idle state (RRC Idle), there is typically no (or limited) RRC context (where a RRC context may include information or parameters necessary for communication between the UE and gNB/network node) stored in the RAN (radio access network) node (e.g., gNB) or network node, or UE, and the UE does not belong (or is not connected to) to a specific cell. From a core network perspective, the Idle UE is in an Idle (CM Idle) state. No data transfer may typically occur between a UE and network node (e.g., gNB) when the UE is in an Idle state, as the UE sleeps (in a low power state) most of the time to conserve power. In an Idle state, a UE may typically periodically wake up to receive paging messages from the network.

A UE may transition from Idle state (e.g., RRC Idle) to a Connected state (e.g., RRC Connected state, where the UE is connected to the network node) by performing a random access (RACH) procedure with the gNB or network node. As part of the RACH procedure, both the UE and network node (e.g., gNB) may obtain the context, e.g., communication parameters necessary to allow UE-gNB communication. As an example communication parameter, the UE may obtain, e.g., as part of a RACH procedure with gNB or network node, a timing advance to allow the UE to perform uplink transmission to the gNB. The UE may also obtain a UE identity from the network, e.g., such as a cell-radio network temporary identifier (C-RNTI), which may be used by the UE for communication or signalling with the network or gNB. In a connected state (e.g., RRC Connected) with respect to a cell (or gNB or DU), the UE is connected to a gNB or network node, and the UE may receive data, and may send data (e.g., based on receiving an uplink grant).

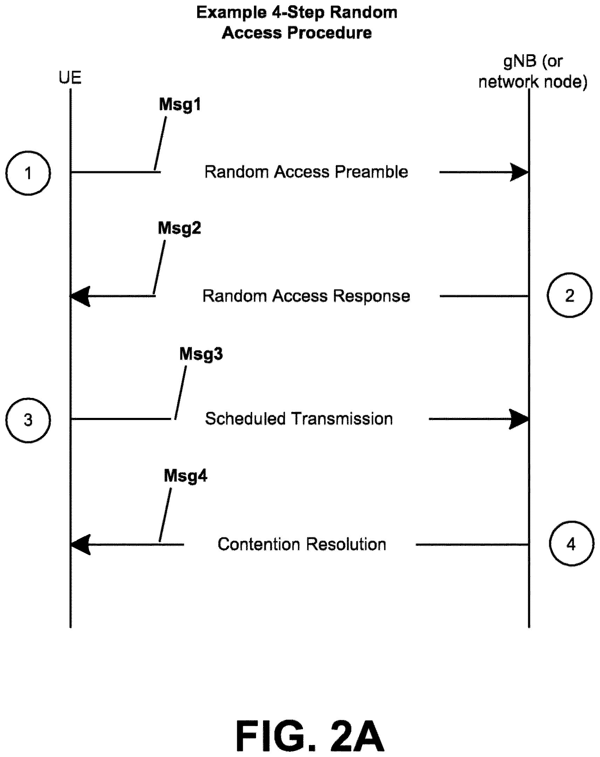

FIG. 2A is a diagram illustrating operations of a 4-step random access (RACH) procedure according to an example embodiment. When the RACH procedure is triggered (caused to be performed by the UE), the UE sends a random access (RACH) preamble over the random access (RACH) channel (Step 1), or Msg1 (message 1). There are different groups of preambles defined or configured, depending on the size of Msg3 (message 3) and based on the UE's channel conditions. The UE obtains information on how to access the RACH channel from system information block 1 (SIB1) broadcasted in the system information (SI) from the gNB. After receiving message 1 (random access preamble from the UE), the gNB determines the receive timing of the received random access preamble. Based on the receive timing of the received preamble (if there are no collisions with other UEs), the gNB determines a timing advance (or TA or timing advance command) to adjust the timing of the UE uplink frame to align with a downlink frame (and also to align uplink receive timing with other UE uplink frames). Because each UE may be provided at a different location, each UE may have a different radio propagation delay, and thus a different or specific timing advance with respect to a gNB.

As shown in FIG. 2A, at Step 2 (Msg2 or message 2), the gNB responds to the UE with a random access response (RAR), which may include an index to (or identifier of) the received random access (or RACH) preamble (index or identifier of a random access preamble resource) (also known as RAPID or random access preamble identifier), the timing advance (TA, or timing advance command), a temporary cell-radio network temporary identifier (TC-RNTI) assigned to the UE, and an uplink (UL) grant (e.g., including scheduling information and/or information indicating resources to be used for UL transmission) to be used by the UE for uplink transmission of message 3 (Msg3). Upon receiving the RAR message (Msg2), the UE can send the first uplink transmission to the network (Msg3 or message 3). The size of the transmission of Msg3 depends on the grant received at step 2 (Msg2 or message 2). Step 4 (Msg 4 or message 4) may include transmission of a DL message from gNB to UE that involves the contention resolution phase. After a UE is connected to a gNB (e.g., after the random access procedure is completed), the UE may receive an updated timing advance (TA) value or TA command from the serving gNB or serving cell.

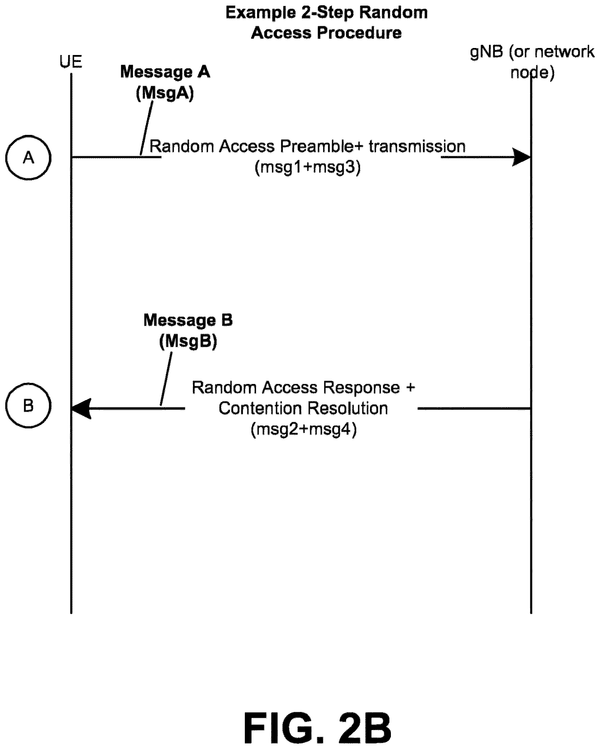

Furthermore, as an alternative RACH procedure, a 2-step RACH (random access) procedure may be used to provide a faster random access procedure. FIG. 2B is a diagram illustrating operations of a 2-step random access (RACH) procedure according to an example embodiment. At message A (MsgA), a UE may transmit a message that includes contents of both Msg1 and Msg3 as a first message (MsgA) of the 2-step RACH procedure. And, for example, the network node or gNB may transmit Msg2 and Msg4 as a second message (or MsgB or message B) of the 2-step RACH procedure.

Triggered mobility may be performed when a UE moves from the coverage area of one cell (the current serving cell) to another cell. Currently, serving cell change may be triggered based on layer 3 measurements provided by the UE. A UE may perform signal measurement for one or more candidate cells. The UE may perform measurement of RSRP (reference signal received power) or RSRQ (reference signal received quality) of reference signals (e.g., SSB signals or CSI-RS signals) received from the candidate cell. RSRP and RSRQ measurements (without filtering, averaging or other processing of the measurements) may be considered Layer 1 (L1) measurements. The UE may typically perform some type of filtering or averaging over time of the signal measurements. These resulting filtered (e.g., averaged) signal measurements are considered layer 3 (L3) signal measurements, since they are processed (e.g., filtered or averaged) by L3 software or protocol entity, for example.

In some cases, layer 1 and/or layer 2 (L1/L2) triggered mobility may be used to trigger cell change for a UE more quickly than using L3 triggered mobility. The goal of L1/L2 mobility enhancements may be to enable a serving cell change via L1/L2 signalling, in order to reduce latency, overhead and interruption time.

A cell change procedure may be performed by a UE performing cell change from a source cell to a target cell. The source cell may be controlled or provided by a source network node (e.g., a source DU or a source gNB), while the destination cell may be controlled or provided by a target network node (e.g., a target DU or a target gNB).

In some cases, the source network node and target network node may be the same network node, e.g., where both the source cell (which is the cell currently serving the UE) and the target cell (the candidate cell to which a cell change or handover may be performed) are provided or controlled by the same network node (e.g., provided by same gNB or DU). A cell change from a source cell to a target cell that are controlled or provided by the same network node (gNB or DU) may be referred to an intra-network node cell change, or intra-DU cell change or intra-DU handover, since in this case both source cell and target cell are provided or controlled by the same network node or DU.

In other cases, the source network node (e.g., source gNB or source DU) may be different than the target network node (e.g., target gNB or target DU). In this case, a cell change or a handover of a UE from a source cell to a target cell may be referred to as inter-network node (e.g., inter-DU, or inter-gNB) cell change or handover, since such a cell change or handover from a source cell controlled by a source network node (or source gNB or source DU) to a target cell controlled by a target network node, which are different network nodes (e.g., different gNBs or different DUs in a split architecture).

A L1/L2 triggered mobility procedure may involve or include the following, for example (source DU (S-DU) and target DU (T-DU) are referenced, as example network nodes, but the network nodes may also be gNBs). The S-DU may provide or control the source cell that is currently serving the UE, while the T-DU controls or provides the target cell that is a candidate for cell change for the UE. The UE is prepared with a target DU/target cells. An early timing advance (TA) acquisition may be used by the UE, where a RACH preamble is transmitted to a target cell, to cause the target cell to determine a timing advance (TA) for the UE, and send this TA to the UE via a random access response (RAR), or message 2 of the RACH procedure. In this manner, the UE may obtain a TA for one or more target cells, and then the cell change or handover of the UE from the source cell to the target cell may be performed more quickly and/or with less latency as compared to the UE obtaining a TA from the target cell only after a cell change to the target cell has been triggered.

After the UE receives a TA acquisition request from the source cell/S-DU, the UE pauses communication (e.g., pauses transmitting and/or receiving data) with the source cell/S-DU, and the UE tunes or adjusts its wireless or radio (RF) transceiver circuits or RF chain to transmit the random access (RACH) preamble to the target cell/T-DU via a RACH (random access) occasion, so that the target T-DU/target cell will estimate the TA for the UE. The target cell/T-DU may then estimate the TA for the UE, and then the target cell/T-DU may transmit the RAR (including the TA for the UE) via one of a plurality of common search space (CSS) occasions (of a physical downlink control channel (PDCCH) within a RAR window. The RAR window may be up to 10 ms, for example. Thus, for example, the communication between UE and source cell/S-DU may be paused or stopped (UE-S-DU communication is temporarily interrupted), to allow the UE to receive the RAR from the target cell/T-DU, up until the end of the RAR window, e.g., which may result in a delay or interruption of 10 ms in the communication between the UE and source cell/S-DU.

Thus, in this case where the random access response (RAR) is received by the UE from the target cell/T-DU, the UE will pause the communication (including pausing or interrupting the transmitting and/or receiving (TX/RX) of data or signals with the S-DU) and tune the UE radio chain to T-DU to send the PRACH (random access) Preamble to target cell/T-DU and receive the RAR from the target cell/T-DU. During this time, the link between the UE and the S-DU is interrupted. This operation may give rise to one or more problems or challenges, such as:
Example Problem #1: The RAR window is T-DU's configuration (configured by T-DU) and the S-DU may not know the length of the RAR window which can be shorter than 10 ms. In the case that it is shorter than 10 ms (e.g., 4 ms), even though the UE resumes the communication (transmitting/receiving (TX/RX)) with the S-DU, the S-DU may not know whether it can resume the communication with the UE after RAR window as the S-DU may not know the RAR window duration. Hence, this may lead to unnecessary communication interruption of, e.g., 6 ms between the UE and the S-DU.

Example Problem #2: Even if the RAR window length is 10 ms and the RAR window length is known by the S-DU, the UE may receive the RAR from T-DU/cell earlier, e.g., in the first 4 ms. In that case, even if the UE resumes the communication (TX/RX) with the S-DU, the S-DU does not resume the communication with the UE as it does not know whether the RAR was received earlier. Hence, this may lead to unnecessary interruption, e.g., of 6 ms.

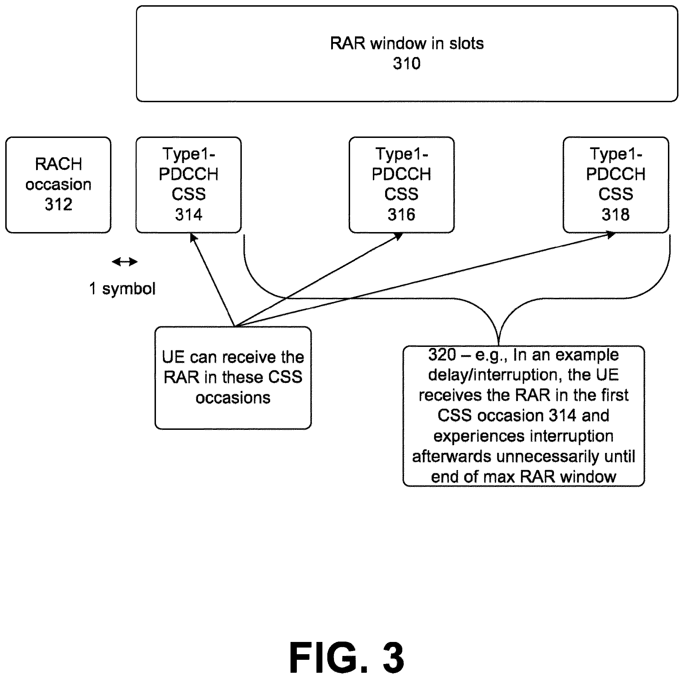

FIG. 3 is a diagram illustrating an example of an interruption that may occur for the communication between a UE and a source-DU (S-DU). In FIG. 3, the UE may transmit the RACH preamble to the target cell/T-DU within a RACH occasion 312, and then waits for the RAR (which will include the TA for the target cell). As shown in FIG. 3, the RAR window 310 may include one or more CSS occasions. The RAR may be transmitted by the target cell/T-DU within one or more CSS occasions within the RAR window, such as within CSS occasions 314, 316 and/or 318. The T-DU sends (transmits) the RAR to the UE only in specific (e.g., Type-1) CSS occasions (within the RAR window 310) which may be scheduled periodically. In the example shown in FIG. 3, there are three CSS occasions 314, 316 and 318, shown that are scheduled periodically by the T-DU/target cell. The UE may only know the periodicity of the CSS and their occasions, but it is up to T-DU/target cell to decide in which CSS occasion it will send the RAR to the UE (e.g., based on T-DU/cell scheduler decision).

Problem#3: The RAR may be scheduled in any of the CSS occasions (314, 316, 318), but the S-DU does not know whether the CSS is transmitted (to be received) in the first CSS occasion 314, the last CSS occasion 318, or one of the CSS occasions in between (e.g., 316). As a consequence, the S-DU waits until end of the RAR window 310 to resume the communication (TX/RX) with the UE. Shown at 320 in FIG. 3, in a worst case delay or interruption, the RAR may be sent in the first CSS occasion 314, but the S-DU still does not resume communication with the UE until after then end of the RAR window 310 (since the S-DU does not know the details of the RAR window, such as the RAR window length). This leads the UE to experience a service or communication interruption after RAR is received until the end of RAR window 310. This problem is similar to Problem #2, however, Problem #2 is addressing the issue where the reception of the RAR is not known to the S-DU. Problem #3 is addressing the case where the CSS occasion used by the T-DU/cell is not known.

Problem #4: As it is shown in FIG. 3, the RAR can only be received at (or during) the CSS occasions. Between the CSS occasions, the UE does not receive any RAR from T-DU/cell. However, during those gaps between the CSS occasions, both the UE and the S-DU cannot resume their communication (TX/RX) as the S-DU does not know the CSS occasions. Even if the S-DU knows the CSS occasions, there is no coordination between the S-DU and the UE for utilizing the gaps between the CSS occasions for communication.

Therefore, according to an example embodiment, techniques are described that allow the UE and source network node (e.g., source cell/S-DU) to more efficiently communicate and/or make use of resources within a RAR window, and/or to decrease communication interruption during a RAR window. As noted, the UE and S-DU may pause communication while the UE waits to receive the RAR from the target cell, which may create a service or communication interruption between UE and S-DU/source cell.

The UE may receive (e.g., via a TA acquisition request and/or via a radio resource control (RRC) message received by the UE from the source cell/S-DU) a RAR window information for a RAR window for a target cell that may allow the UE and source cell/S-DU to coordinate a more efficient use of resources of or during a RAR window for communication, in order to decrease communication/service interruption for UE. The RAR window information for the target cell may include, e.g., at least one of: an indication for the UE to resume data communication with a source cell after a RAR is received by the UE from the target cell within the RAR window, or an indication (e.g., an intermittent communication indication) for the UE to perform the data communication with the source cell between at least two common search space (CSS) occasions within the RAR window.

In general, the RAR window information may include at least one of the following: a RAR window length; an indication of common search space (CSS) occasions within the RAR window, wherein the RAR may be received by the user device during a CSS occasion; an indication for the user device to resume data communication with the source cell within the RAR window after the RAR is received by the user device from the target cell; an indication of at least one user device-specific common search space (CSS) occasion, of a plurality of CSS occasions within the RAR window, where the RAR will may be transmitted to the user device from the target cell; and/or an intermittent communication indication that instructs the user device to perform data communication with the source cell in one or more gaps between the CSS occasions within the RAR window.

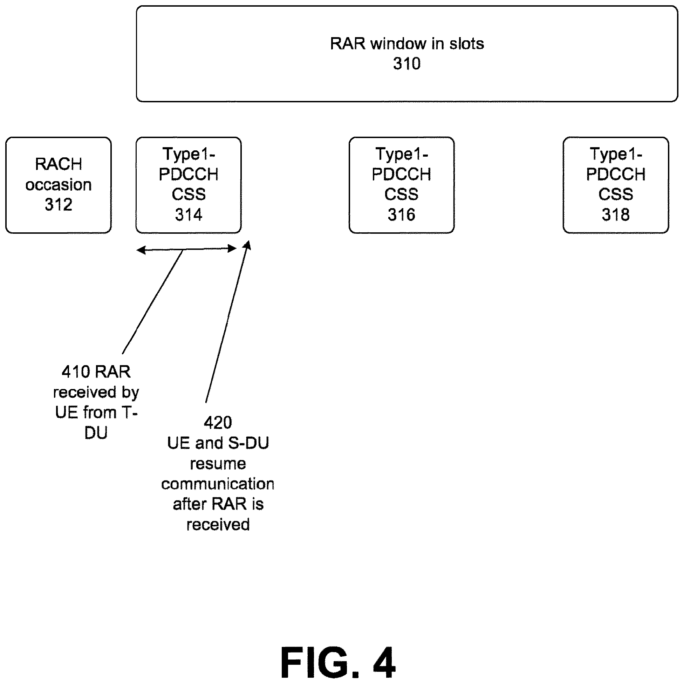

FIG. 4 is a diagram illustrating more efficient use of resources of the RAR window based on the UE receiving a RAR window information from the source cell/S-DU including an indication for the UE to resume data communication with a source cell after a RAR is received by the UE from the target cell. In this example, communication between UE and source cell/S-DU is resumed or performed based on the UE receiving the RAR from the target cell/T-DU. For example, at 410, the UE may receive the RAR (including the TA for the UE) from the target cell/T-DU. And, based on the UE receiving the RAR window information including an indication for the UE to resume data communication with a source cell after a RAR is received by the UE from the target cell within the RAR window, and based on the UE receiving the RAR at 410, the UE and source cell/S-DU may resume or perform communication at 420 (after receipt of the RAR), for example, rather than waiting until the end of the RAR window 310. Alternatively, if, for example, the RAR window information indicates the RAR window length as ending at 420, the UE and source cell/S-DU may resume or perform communication after the RAR window length has completed (or has expired), at 420.

If the source cell and the target cell are provided or controlled by the same network node or DU (e.g., S-DU) (e.g., intra-DU case), the S-DU will know when the RAR is transmitted to the UE and/or received by the UE. Thus, there is no need for UE to inform S-DU when it has received the RAR. Also, for example, if the source cell and target cell are provided by different DUs (e.g., S-DU and T-DU are different DUs, referred to as the inter-DU case), the UE may send a message to the S-DU indicating that the UE has received the RAR, which may also indicate to the source cell/S-DU to resume or perform communication with the UE.

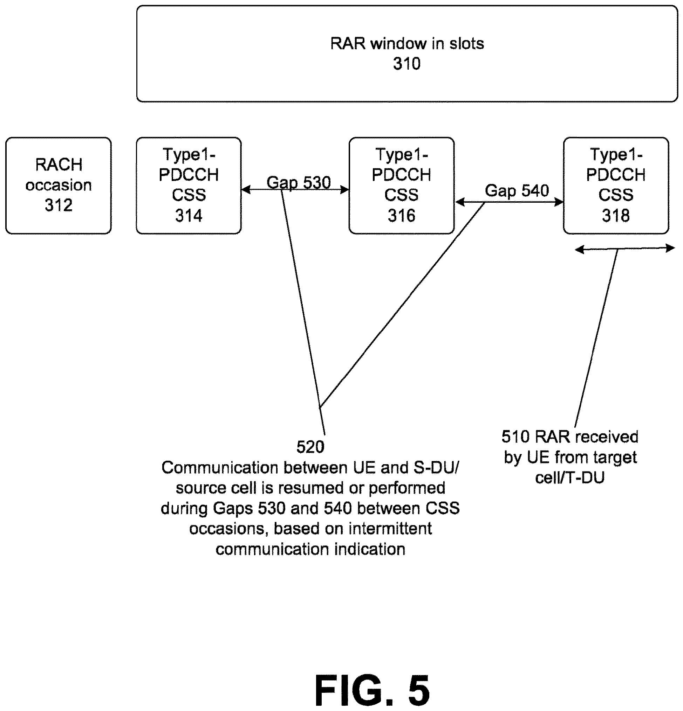

FIG. 5 is a diagram illustrating another example of a more efficient use of resources of the RAR window based on the UE receiving a RAR window information including an intermittent communication indication that instructs the UE to perform or resume communication with the source cell/S-DU in gaps between the CSS occasions. As shown in FIG. 5, CSS occasions 314, 316 and 318 are shown. The RAR is not received until CSS occasion 318. The UE may need to monitor (in this example) all of the CSS occasions 314, 316, 318. The RAR was not received via CSS occasions 314 or 316, but was received via CSS occasion 318, according to this example. Also, based on the UE receiving the intermittent communication indication from the source cell/S-DU, the UE and source cell/S-DU will perform or resume communication in or during gap 530 between CSS occasions 314 and 316, and the UE and source cell/S-DU will perform or resume communication in or during gap 540 between CSS occasions 316 and 318, according to this illustrative example. Also, the RAR window information may indicate CSS occasions, and then the UE and S-DU may pause or cease communication during these CSS occasions, to allow the UE to monitor and/or receive the RAR from the target cell/T-DU.

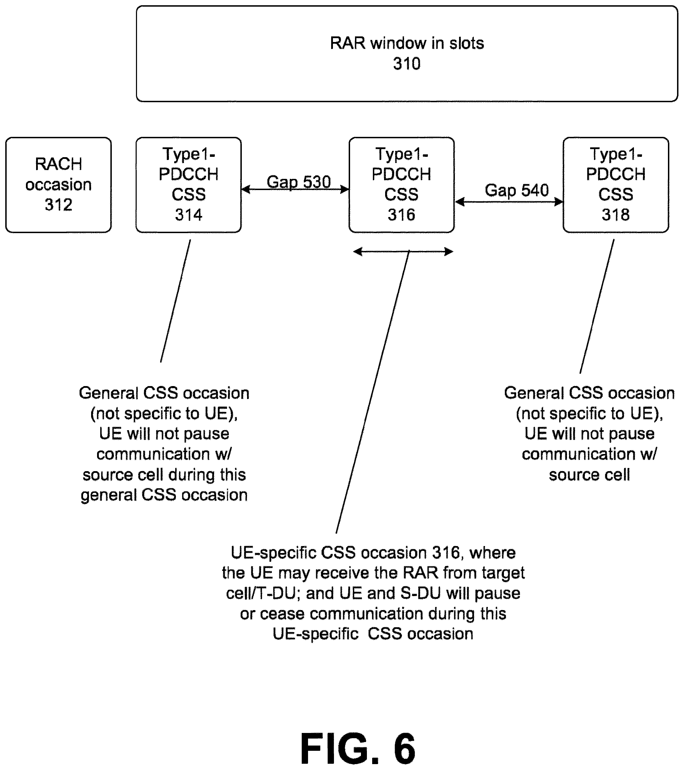

FIG. 6 is a diagram illustrating another example of a more efficient use of resources of the RAR window based on the UE receiving a RAR window information including information indicating at least one user device-specific common search space (CSS) occasion, of a plurality of CSS occasions within the RAR window. The RAR may be transmitted to the user device from the target cell via one of these user device-specific CSS occasions. In this illustrative example, the plurality of CSS occasions may be or may include CSS occasions 314, 316 and 318 (possibly among others, not shown). In this example, the RAR window information may indicate that CSS occasion 316 is a UE-specific (or user device-specific) CSS occasion, during which the UE may receive the RAR from the target cell/T-DU. The other CSS occasions, 314, and 318, are general CSS occasions (not specific to UE), and the UE will not receive the RAR during these general CSS occasions 314, 318. Thus, the UE need not pause communication during the general CSS occasions 314, 318 to monitor for the RAR from the target cell, since the RAR will not be sent to the UE during these general CSS occasions. The UE should or may pause communication during the one or more UE-specific CSS occasions (such as during UE-specific CSS occasion 316, FIG. 6), only until the RAR has been received. After the RAR has been received by the UE, the UE need not pause communication with S-DU within the RAR window 310 even during the subsequent UE-specific CSS occasions within the RAR window 310, since the RAR has already been received by the UE. Thus, in such a case, the UE may perform or resume communication with source cell/S-DU during one or more UE-specific CSS occasions within the RAR window 310 after the UE has received the RAR from the target cell.

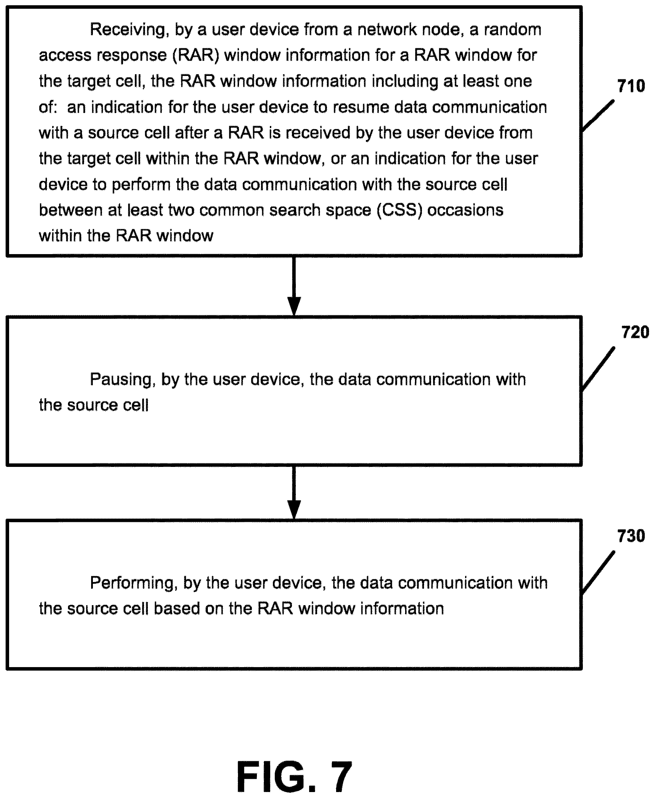

FIG. 7 is a flow chart illustrating operation of a user device (or UE) according to an example embodiment. Operation 710 of FIG. 7 includes receiving, by a user device (UE) from a network node (e.g., a gNB, a DU, such as a source DU (S-DU), for example), a random access response (RAR) window information for a RAR window for the target cell, the RAR window information including at least one of: an indication for the user device to resume data communication with a source cell after a RAR is received by the user device from the target cell within the RAR window, or an indication for the user device to perform the data communication with the source cell between at least two common search space (CSS) occasions within the RAR window. Operation 720 of FIG. 7 includes pausing, by the user device, the data communication with the source cell. And, operation 730 includes performing, by the user device (or UE), the data communication with the source cell based on the RAR window information.

With respect to the method of FIG. 7, the method may further include receiving, by the user device from the network node, a timing advance acquisition request for the target cell; wherein the pausing, by the user device, the data communication with the source cell comprises: pausing, based on the timing advance acquisition request for the target cell, the data communication with the source cell to allow the user device to monitor one or more CSS occasions of the at least two CSS occasions for the RAR from the target cell.

With respect to the method of FIG. 7, the RAR window information may further include a RAR window length of the RAR window for the target cell.

With respect to the method of FIG. 7, the RAR window information may include the indication for the user device to resume the data communication with the source cell after the RAR is received by the user device from the target cell within the RAR window; the method including: receiving, by the user device, the RAR from the target cell; and the performing the data communication including resuming, by the user device, the data communication with the source cell after the RAR is received by the user device from the target cell.

With respect to the method of FIG. 7, the method may further include ceasing, by the user device, to monitor one or more subsequent CSS occasions within the RAR window after the RAR is received by the user device from the target cell.

With respect to the method of FIG. 7, the RAR window information may include the indication for the user device to perform the data communication with the source cell between at least two common search space (CSS) occasions where the user device may receive the RAR from the target cell; the performing the data communication including: performing, by the user device, the data communication with the source cell in a gap between the two CSS occasions within the RAR window.

With respect to the method of FIG. 7, the at least two CSS occasions include at least a first CSS occasion and a second CSS occasion within the RAR window where the user device may receive the RAR from the target cell, wherein the method comprises: monitoring, by the user device, the first CSS occasion for the RAR from the target cell; the performing the data communication comprising performing, by the user device, the data communication with the source cell in a gap between the first CSS occasion and the second CSS occasion; and the method further comprising: further pausing, by the user device before the second CSS occasion, the data communication with the source cell; and monitoring, by the user device, the second CSS occasion for the RAR from the target cell.

With respect to the method of FIG. 7, the RAR window information for the RAR window for the target cell is received by the user device via a radio resource control (RRC) message or the timing advance acquisition request.

With respect to the method of FIG. 7, the RAR window information may include information indicating at least one common search space (CSS) occasion within the RAR window where the RAR will be transmitted to the user device from the target cell;
the method including: receiving, by the user device from the target cell via a CSS occasion of the at least one CSS occasion within the RAR window, the RAR from the target cell.

With respect to the method of FIG. 7, the RAR window information may include information indicating at least one user device-specific common search space (CSS) occasion, of a plurality of CSS occasions, within the RAR window where the RAR may be transmitted to the user device from the target cell.

With respect to the method of FIG. 7, the pausing may include pausing the data communication with the source cell during the at least one user device-specific CSS occasion, until the RAR has been received by the user device from the target cell; the method including after the RAR has been received by the user device from the target cell during the at least one user device-specific CSS occasion, resuming, by the user device, the data communication with the source cell within the RAR window without pausing data communication during any subsequent user device-specific CSS occasions of the at least one user device-specific occasion within the RAR window.

With respect to the method of FIG. 7, the method may include performing, by the user device, the data communication with the source cell during any of the plurality of CSS occasions of the RAR window that are not the at least one user device-specific CSS occasion, regardless whether the RAR has been received.

With respect to the method of FIG. 7, the plurality of CSS occasions may include at least one user device-specific CSS occasion on which the RAR may be received from the target cell, and at least one general CSS occasion that is not specific to the user device, the method including: pausing, by the user device, the data communication with the source cell to monitor transmissions from the target cell for the RAR, within the at least one user device-specific CSS occasion, until the RAR has been received from the target cell; and performing, by the user device, the data communication with the source cell, within the at least one general CSS occasion that is not specific to the user device.

With respect to the method of FIG. 7, the RAR window information may include: information indicating at least two common search space (CSS) occasions within the RAR window for the target cell, within which the RAR may be transmitted to the user device; and an intermittent or CSS gap communication indication that instructs the user device to perform the data communication with the source cell in one or more gaps between the at least two CSS occasions within the RAR window; and the performing the data communication comprising performing at least one of transmitting data to or receiving data from the source cell within a gap between the at least two CSS occasions within the RAR window.

With respect to the method of FIG. 7, the method may include receiving, by the user device from the target cell, the RAR; and, transmitting, by the user device to the source cell, an indication that the RAR has been received by the user device from the target cell.

With respect to the method of FIG. 7, the RAR window information may include the indication for the user device to resume the data communication with the source cell after the RAR is received by the user device from the target cell within the RAR window; the method including: receiving, by the user device, the RAR from the target cell; transmitting, by the user device to the source cell, an indication that the RAR has been received by the user device from the target cell; and the performing the data communication comprising resuming, by the user device, the data communication with the source cell after the RAR has been received by the user device and based on the user device transmitting the indication to the source cell indicating that the RAR has been received by the user device.

With respect to the method of FIG. 7, the RAR window information may include at least one of the following: a RAR window length; an indication of common search space (CSS) occasions within the RAR window, wherein the RAR may be received by the user device during a CSS occasion; an indication for the user device to resume data communication with the source cell within the RAR window after the RAR is received by the user device from the target cell; an indication of at least one user device-specific common search space (CSS) occasion, of a plurality of CSS occasions within the RAR window, where the RAR will may be transmitted to the user device from the target cell; and/or an intermittent communication indication that instructs the user device to perform data communication with the source cell in one or more gaps between the CSS occasions within the RAR window.

With respect to the method of FIG. 7, the network node may include a source network node, wherein: the source cell is associated with or provided by the source network node; and the target cell is different from the source cell, and the target cell is associated with or provided by the source network node.

With respect to the method of FIG. 7, the network node may include a source network node, wherein: the source cell is associated with or provided by the source network node; and the target cell is different from the source cell, and the target cell is associated with or provided by a target network node that is different from the source network node.

With respect to the method of FIG. 7, the source network node may include a source distributed unit. Also, the source network node may include a source distributed unit (DU); and the target network node may include a target DU.

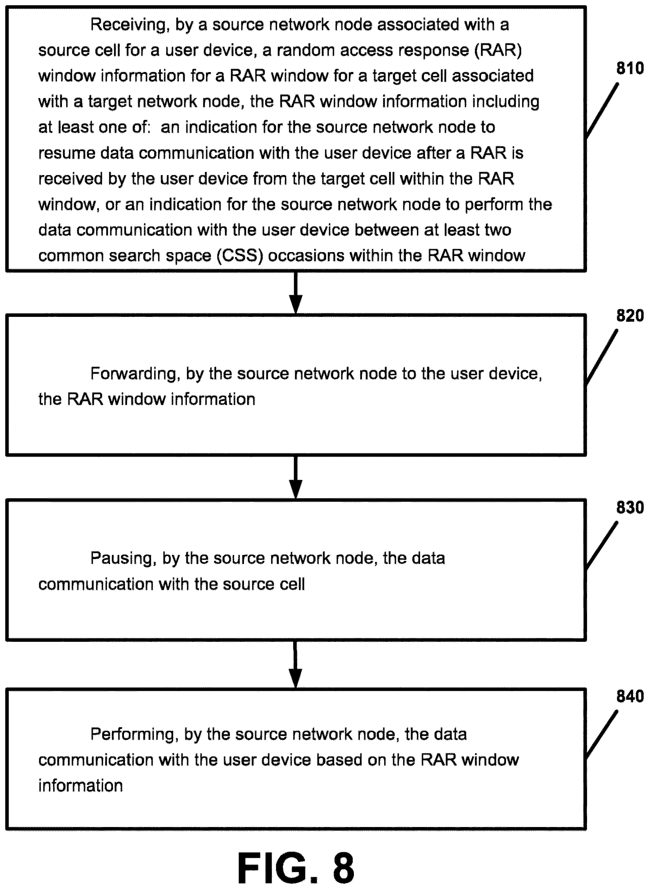

FIG. 8 is a flow chart illustrating operation of a network node according to an example embodiment. Operation 810 includes receiving, by a source network node associated with a source cell for a user device, a random access response (RAR) window information for a RAR window for a target cell associated with a target network node, the RAR window information including at least one of: an indication for the source network node to resume data communication with the user device after a RAR is received by the user device from the target cell within the RAR window, or an indication for the source network node to perform the data communication with the user device between at least two common search space (CSS) occasions within the RAR window; Operation 820 includes forwarding, by the source network node to the user device, the RAR window information; operation 830 includes pausing, by the source network node, the data communication with the source cell; and Operation 840 includes performing, by the source network node, the data communication with the user device based on the RAR window information.

With respect to the method of FIG. 8, the RAR window information may include the indication for the user device to resume data communication with the source cell after the RAR is received by the user device from the target cell within the RAR window; the method including: receiving, by the source network node, an indication that the RAR has been received by the user device from the target cell; wherein the performing comprises resuming, by the source network node, user device, data communication with the user device based on the source network node receiving the indication that the RAR has been received by the user device from the target cell.

With respect to the method of FIG. 8, the RAR window information further includes at least one of: a RAR window length of the RAR window for the target cell; time slots of the at least two CSS occasions, and/or periodicity of the at least two CSS occasions.

With respect to the method of FIG. 8, the RAR window information may include the indication for the source network node to perform communication with the user device between at least two common search space (CSS) occasions where the source network node may transmit the RAR to the user device; the performing the data communication including: performing, by the source network node, the data communication with the user device in a gap between the at least two CSS occasions within the RAR window.

### Case #1: Source and Target Cell Under Same DU

In this case, both the source and target cell are under the same DU. Since both cells are under the same DU, it does not require any coordination between the DUs. In one alternative, CU involvement can be also avoided.

Example Solution #1: In this solution, source cell allows intermittent TX/RX (communication) within CSS occasion gaps during the RAR window and indicates that to the UE along with the TA acquisition command (e.g., provided within PDCCH order) or in the RRC configuration (e.g., where RAR reception is configured). Since both source and target cells are under the same DU, the S-DU is aware of the CSS occasions over which the RAR could be sent. Hence, S-DU can transmit and receive in the gaps between the CSSs during the RAR window. If the UE is configured with the intermittent communication (intermittent TX/RX between CSS gaps), then both UE and the source cell/S-DU can resume the TX/RX during the CSS occasion gaps. Upon reception of RAR, since both UE and the DU is aware of RAR reception, communication (TX/RX) between the UE and the source cell can be resume.

### Case #2: Source and Target Cell Under Different Dus

Example Solution #2: In this case, the source cell and the target cell are under different DUs, hence coordination is required between the DUs about the RAR procedure, i.e., source DU should know (or may be notified of) the RAR configuration of the T-DU as well as the reception of the RAR by the UE to resume communication between UE and S-DU. Similarly, the UE should know that there is a coordination between the S-DU and T-DU so that UE can also resume the communication (TX/RX) during RAR window.

### Example Solution #1

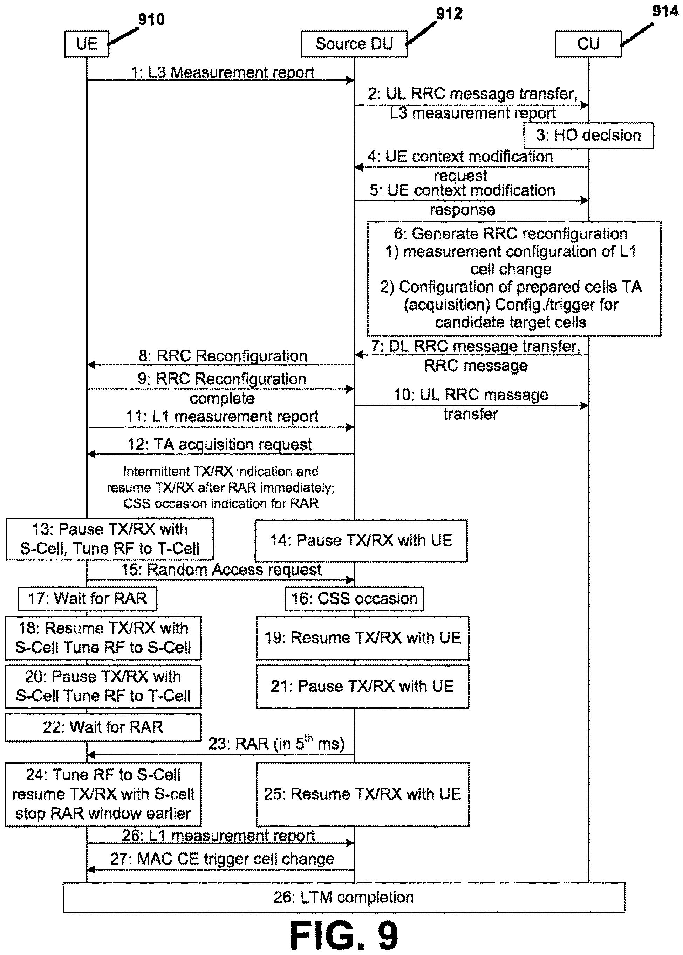

FIG. 9 is a diagram illustrating L1/L2 Trigger Mobility (LTM) according to an example embodiment, for intra-DU case, where both serving cell and target cell are controlled or provided by the same Source DU (S-DU). As shown in FIG. 9, a UE 910, a source DU 912 and a CU 914 are shown, and may be in communication.

Step 1: UE 910 is served by a serving cell that is under the S-DU 912. The UE 910 sends the L3 measurement reports to the S-DU 912.

Step 2: The S-DU 912 forwards the L3 measurements to the CU 914.

Step 3: The CU 914 determines the LTM preparation for the neighbor cell(s) that is under the same DU of the serving cell (S-DU).

Step 4: The CU 914 sends the LTM preparation request to the S-DU 912.

Step 5: The S-DU 912 sends to CU 914 the configurations that are needed for LTM preparation of the candidate cell(s) under the S-DU.

Step 6: The CU 914 generates the LTM configuration that will be used by the UE 910 to access the target cell upon triggering the cell switch command.

Step 7: The CU 914 sends the LTM configuration to the S-DU 912.

Step 8: The S-DU 912 forwards the LTM configuration to the UE 910.

Step 9: Once the LTM configuration is received by UE 910, the UE 910 sends the acknowledgement to the S-DU 912 as a response.

Step 10: S-DU 912 forwards the response of the UE 910 to the CU 914.

Step 11: Once the UE 910 receives the LTM configuration, it starts reporting the L1 measurements that are configured along with the LTM configuration.

Step 12: The S-DU 912 determines to trigger the TA acquisition of the target cell and sends the TA acquisition command in step 12. Since the target cell is under the same DU, the S-DU 912 configures the UE 910 to perform intermittent TX/RX during the RAR window. With this configuration the following is indicated to the UE 910. The serving cell will resume the UE-S-DU communication (TX/RX) between CSS occasions. The UE 910 should resume the communication (TX/RX) between the CSS occasions. Since the UE 910 stops listening or monitoring the CSS occasions after the RAR is received, the S-DU 912 also indicates or instructs the UE 910 to resume the communication (TX/RX) after RAR is received by UE 910 (hence the next CSS occasions will also be used for communication (TX/RX)).

For example, messages at steps 7, 8 and/or 12 may provide RAR window information.

Steps 13 and 14: Both the UE 910 and the serving cell/S-DU 912 pause the communication (TX/RX) (communication between UE and source cell/S-DU) after step 12 as the UE 910 needs to pause the communication (TX/RX) for sending the PRACH Preamble to the target cell. The UE 910 may tune its RF chain to receive signals from the target cell/T-DU, in order to attempt to receive the RAR from target cell. This is why the UE 910 will pause communication with the source cell/S-DU 912 while the UE 910 attempts to receive the RAR from target cell/T-DU.

Step 15: The UE 910 sends the PRACH Preamble to the target cell that is under or provided by the S-DU 912.

In steps 16 and 17, the UE 910 waits for the RAR from the target cell. For example, at a first CSS occasion, the UE 910 monitors transmissions from the target cell for the RAR. But the RAR is not received at the first CSS at step 16, for example.

Steps 18 and 19: Both the UE 910 and the serving cell/S-DU 912 resume the communication (TX/RX) after CSS occasion at 16/17. Thus, in this manner, the UE 910 and source cell/S-DU 912 may perform or resume communication in a gap between two CSS occasions.

Steps 20 and 21: Both the UE 910 and the source cell/S-DU 912 pause the communication (TX/RX) so that the UE 910 may listen or monitor the next CSS occasion for RAR from target cell/T-DU.

Steps 22 and 23: The UE 910 will wait for the RAR reception from the target cell and receives the RAR afterwards. In this example, at step 23, the UE 910 receives the RAR from the target cell/T-DU.

Steps 24 and 25: The UE 910 tunes its RF chain to transmit and receive signals or data with source cell/S-DU 912. In this example, because the UE 910 has received the RAR from target cell, both the UE 910 and the source cell/S-DU 912 resume their communication (TX/RX) after the RAR reception. The UE 910 does not listen or monitor the rest of the RAR window for RAR (since the UE 910 has already received the RAR), and the UE 910 does not monitor next CSS anymore as configured in the step 12, since the UE 910 has already received RAR from target cell. Thus, remainder of RAR window (after reception of RAR) may be used by the UE 910 and the source cell/S-DU 912 for their communication.

Steps 26 to 28: The UE 910 continues L1 measurements and handovers to target cell. Note: The configuration in step 12 can also be provided in steps 4, 5 and 6 and forwarded in step 7 and 8 inside the RRC Reconfiguration instead of configuring the UE 910 via step 12.

Also, as another enhancement or option, at Step 12: The S-DU 912 may also indicate to the UE which (e.g., specific) CSS occasion(s) (UE-specific CSS occasions) it should listen or monitor for RAR. In that case, the UE is expected to pause the communication with source cell/S-DU only during the indicated UE-specific CSS occasion(s). During the RAR window, before and after the indicated CSS occasion(s), the UE 910 and serving cell/S-DU 912 will perform or resume their communication (TX/RX).

### Example Solution #2

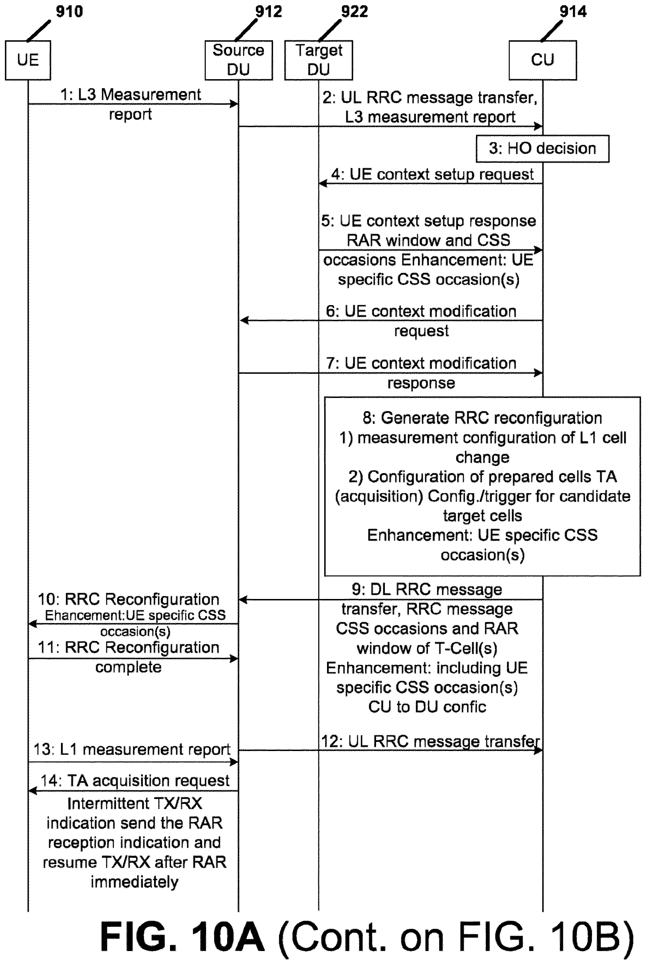

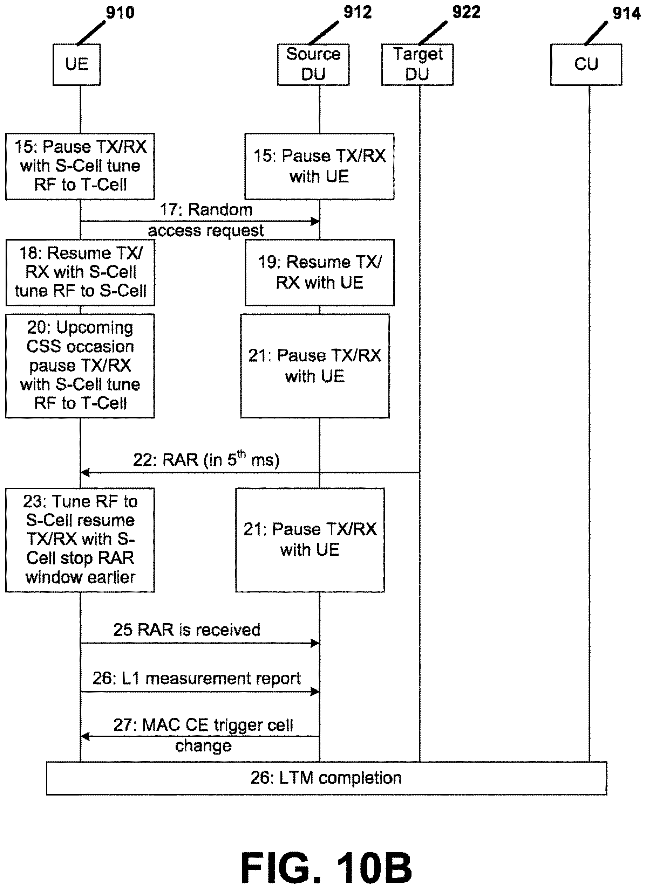

FIGs. 10A and 10B are a diagram illustrating L1/L2 Trigger Mobility (LTM) according to an example embodiment, for inter-DU case, where serving cell and target cell are controlled or provided by different DUs (S-DU and T-DU).

With respect to FIGs. 10A and 10B, a RAR interruption time reduction solution is proposed for TA acquisition in case of inter-DU mobility scenario.

Steps 1 to 4: Same as steps 1 to 4 in FIG. 9.

Step 5: The T-DU 922 provides to the CU 914 the RAR window (e.g., RAR window length) and CSS occasion information (e.g., slot offset, periodicity, symbol locations within the slot or starting symbols and number of symbols, etc.) for each prepared target cell along with the UE context response.

Steps 6 to 7: The S-DU 912 and the CU 914 will perform UE context modification procedure before LTM preparation configuration.

Step 8: The CU 914 will generate the LTM preparation configuration for the UE 910. The CU 914 includes the UE specific CSS occasion(s) per target cell (provided by T-DU 922) in the LTM configuration.

Step 9: The CU 914 will send the LTM configuration to the source DU 912. The CU 914 will also inform the S-DU 912 about the RAR window and CSS occasions of the prepared target cells (outside of the RRC message).

Step 10: The S-DU 912 forwards the RRC Reconfiguration generated by CU 914, to UE 910. This may include the RAR window information. Steps 9, 10 and/or 14 may include or send the RAR window information.

Step 11: Once the LTM configuration is received, the UE 910 sends the acknowledgement to the S-DU 912 as a response.

Step 12: S-DU 912 forwards the response of the UE 910 to the CU 914.

Step 13: Once the UE 910 receives the LTM configuration, it starts reporting the L1 measurements (to the source cell/S-DU 912) that are configured along with the LTM configuration.

Step 14: The S-DU 912 determines to trigger the TA acquisition (by UE 910) of the target cell and sends the TA acquisition command in step 14. This instructs UE to send RACH to obtain RAR from target cell/T-DU 922.

Steps 15 to 24: Same as steps 13 to 25 in FIG. 9.

Step 25: The UE 910 sends indication to S-DU 912 for RAR reception. Hence, for the later CSS occasions, the S-DU 912 knows that the UE 910 will continue the communication with the S-DU 912 as the UE 910 has received RAR and does not need to listen to or monitor the rest of the RAR window, thus the UE 910 and the S-DU 912 may perform communication for rest of RAR window.

Steps 26 to 28: The UE 910 continues L1 measurements and performs cell change or handover to target cell, based on cell change request received at step 27. Note: In case of CSS occasion is not configured (due to T-DU scheduler) and intermittent communication between the UE 910 and the S-DU 912 is not configurable (due to UE capability), RAR window configuration of each target cell should still be known for the S-DU 912 so that the S-DU 912 will know when the UE 910 will start and stop the communication (TX/RX) (during the RAR window).

Further options or enhancement: In steps 5, 8, 9 and 10, the T-DU 922 also provides to the UE 910 the UE specific CSS occasions that will be used for TA acquisition related RAR transmission. If this is configured, the UE 910 will only listen to or monitor the specific CSS occasions during RAR window (and will stop monitoring such UE-specific CSS occasions after the UE 910 has received the RAR from target cell). In case of UE specific CSS occasion slot(s) are configured inside the RRC message and those CSS occasions are also provided to the S-DU 912 outside of the RRC message.

Some examples will now be described.

Example 1. A method comprising: receiving, by a user device from a network node, a random access response (RAR) window information for a RAR window for the target cell, the RAR window information including at least one of: an indication for the user device to resume data communication with a source cell after a RAR is received by the user device from the target cell within the RAR window, or an indication for the user device to perform the data communication with the source cell between at least two common search space (CSS) occasions within the RAR window; pausing, by the user device, the data communication with the source cell; and performing, by the user device, the data communication with the source cell based on the RAR window information.

Example 2. The method of example 1, further comprising receiving, by the user device from the network node, a timing advance acquisition request for the target cell; wherein the pausing, by the user device, the data communication with the source cell comprises: pausing, based on the timing advance acquisition request for the target cell, the data communication with the source cell to allow the user device to monitor one or more CSS occasions of the at least two CSS occasions for the RAR from the target cell.

Example 3. The method of any of examples 1-2, wherein the RAR window information further comprises a RAR window length of the RAR window for the target cell.

Example 4. The method of any of examples 1-3, wherein the RAR window information comprises the indication for the user device to resume the data communication with the source cell after the RAR is received by the user device from the target cell within the RAR window; the method comprising: receiving, by the user device, the RAR from the target cell; and the performing the data communication comprising resuming, by the user device, the data communication with the source cell after the RAR is received by the user device from the target cell.

Example 5. The method of example 4, further comprising: ceasing, by the user device, to monitor one or more subsequent CSS occasions within the RAR window after the RAR is received by the user device from the target cell.

Example 6. The method of any of examples 1-3, wherein the RAR window information comprises the indication for the user device to perform the data communication with the source cell between at least two common search space (CSS) occasions where the user device may receive the RAR from the target cell; the performing the data communication comprising: performing, by the user device, the data communication with the source cell in a gap between the two CSS occasions within the RAR window.

Example 7. The method of example 6, wherein the at least two CSS occasions comprise at least a first CSS occasion and a second CSS occasion within the RAR window where the user device may receive the RAR from the target cell, wherein the method comprises: monitoring, by the user device, the first CSS occasion for the RAR from the target cell; the performing the data communication comprising performing, by the user device, the data communication with the source cell in a gap between the first CSS occasion and the second CSS occasion; and the method further comprising: further pausing, by the user device before the second CSS occasion, the data communication with the source cell; and monitoring, by the user device, the second CSS occasion for the RAR from the target cell.

Example 8. The method of any of examples 1-7, wherein the RAR window information for the RAR window for the target cell is received by the user device via a radio resource control (RRC) message or the timing advance acquisition request.

Example 9. The method of any of examples 1-8, wherein the RAR window information comprises information indicating at least one common search space (CSS) occasion within the RAR window where the RAR will be transmitted to the user device from the target cell; the method comprising: receiving, by the user device from the target cell via a CSS occasion of the at least one CSS occasion within the RAR window, the RAR from the target cell.

Example 10. The method of any of examples 1-9, wherein the RAR window information comprises information indicating at least one user device-specific common search space (CSS) occasion, of a plurality of CSS occasions, within the RAR window where the RAR may be transmitted to the user device from the target cell.

Example 11. The method of example 10, comprising: the pausing comprises pausing the data communication with the source cell during the at least one user device-specific CSS occasion, until the RAR has been received by the user device from the target cell; after the RAR has been received by the user device from the target cell during the at least one user device-specific CSS occasion, resuming, by the user device, the data communication with the source cell within the RAR window without pausing data communication during any subsequent user device-specific CSS occasions of the at least one user device-specific occasion within the RAR window.

Example 12. The method of any of examples 10-11, comprising: performing, by the user device, the data communication with the source cell during any of the plurality of CSS occasions of the RAR window that are not the at least one user device-specific CSS occasion, regardless whether the RAR has been received.

Example 13. The method of example 10, wherein the plurality of CSS occasions comprises at least one user device-specific CSS occasion on which the RAR may be received from the target cell, and at least one general CSS occasion that is not specific to the user device, the method comprising: pausing, by the user device, the data communication with the source cell to monitor transmissions from the target cell for the RAR, within the at least one user device-specific CSS occasion, until the RAR has been received from the target cell; and performing, by the user device, the data communication with the source cell, within the at least one general CSS occasion that is not specific to the user device.

Example 14. The method of any of examples 1-11, wherein the RAR window information comprises: information indicating at least two common search space (CSS) occasions within the RAR window for the target cell, within which the RAR may be transmitted to the user device; and an intermittent or CSS gap communication indication that instructs the user device to perform the data communication with the source cell in one or more gaps between the at least two CSS occasions within the RAR window; and the performing the data communication comprising performing at least one of transmitting data to or receiving data from the source cell within a gap between the at least two CSS occasions within the RAR window.

Example 15. The method of example 1, further comprising: receiving, by the user device from the target cell, the RAR; transmitting, by the user device to the source cell, an indication that the RAR has been received by the user device from the target cell.

Example 16. The method of example 1, wherein the RAR window information comprises the indication for the user device to resume the data communication with the source cell after the RAR is received by the user device from the target cell within the RAR window; the method comprising: receiving, by the user device, the RAR from the target cell; transmitting, by the user device to the source cell, an indication that the RAR has been received by the user device from the target cell; and the performing the data communication comprising resuming, by the user device, the data communication with the source cell after the RAR has been received by the user device and based on the user device transmitting the indication to the source cell indicating that the RAR has been received by the user device.

Example 17. The method of example 1, wherein the RAR window information comprises at least one of the following: a RAR window length; an indication of common search space (CSS) occasions within the RAR window, wherein the RAR may be received by the user device during a CSS occasion; an indication for the user device to resume data communication with the source cell within the RAR window after the RAR is received by the user device from the target cell; an indication of at least one user device-specific common search space (CSS) occasion, of a plurality of CSS occasions within the RAR window, where the RAR will may be transmitted to the user device from the target cell; and/or an intermittent communication indication that instructs the user device to perform data communication with the source cell in one or more gaps between the CSS occasions within the RAR window.

Example 18. The method of any of examples 1-17, wherein the network node comprises a source network node, wherein: the source cell is associated with or provided by the source network node; and the target cell is different from the source cell, and the target cell is associated with or provided by the source network node.

Example 19. The method of any of examples 1-17, wherein the network node comprises a source network node, wherein: the source cell is associated with or provided by the source network node; and the target cell is different from the source cell, and the target cell is associated with or provided by a target network node that is different from the source network node.

Example 20. The method of any of examples 17-19, wherein: the source network node comprises a source distributed unit.

Example 21. The method of claim 19, wherein: the source network node comprises a source distributed unit (DU); and the target network node comprises a target DU.

Example 22. An apparatus comprising: at least one processor; and at least one memory including computer program code; the at least one memory and the computer program code configured to, with the at least one processor, cause the apparatus at least to perform the method of any of examples 1-21.

Example 23. A non-transitory computer-readable storage medium comprising instructions stored thereon that, when executed by at least one processor, are configured to cause a computing system to perform the method of any of examples 1-21.

Example 24. An apparatus comprising means for performing the method of any of examples 1-21.

Example 25. An apparatus comprising: at least one processor; and at least one memory including computer program code; the at least one memory and the computer program code configured to, with the at least one processor, cause the apparatus at least to: receive, by a user device from a network node, a random access response (RAR) window information for a RAR window for the target cell, the RAR window information including at least one of: an indication for the user device to resume data communication with a source cell after a RAR is received by the user device from the target cell within the RAR window, or an indication for the user device to perform the data communication with the source cell between at least two common search space (CSS) occasions within the RAR window; pause, by the user device, the data communication with the source cell; and perform, by the user device, the data communication with the source cell based on the RAR window information.

Example 26. A method comprising: receiving, by a source network node associated with a source cell for a user device, a random access response (RAR) window information for a RAR window for a target cell associated with a target network node, the RAR window information including at least one of: an indication for the source network node to resume data communication with the user device after a RAR is received by the user device from the target cell within the RAR window, or an indication for the source network node to perform the data communication with the user device between at least two common search space (CSS) occasions within the RAR window; forwarding, by the source network node to the user device, the RAR window information; pausing, by the source network node, the data communication with the source cell; and performing, by the source network node, the data communication with the user device based on the RAR window information.

Example 27. The method of example 26, wherein the RAR window information comprises the indication for the user device to resume data communication with the source cell after the RAR is received by the user device from the target cell within the RAR window; the method comprising: receiving, by the source network node, an indication that the RAR has been received by the user device from the target cell; wherein the performing comprises resuming, by the source network node, user device, data communication with the user device based on the source network node receiving the indication that the RAR has been received by the user device from the target cell.

Example 28. The method of example 26, wherein the RAR window information further comprises at least one of: a RAR window length of the RAR window for the target cell; time slots of the at least two CSS occasions, and/or periodicity of the at least two CSS occasions.

Example 29. The method of example 26, wherein the RAR window information comprises the indication for the source network node to perform communication with the user device between at least two common search space (CSS) occasions where the source network node may transmit the RAR to the user device; the performing the data communication comprising: performing, by the source network node, the data communication with the user device in a gap between the at least two CSS occasions within the RAR window.

Example 30. The method of any of examples 26-29, wherein the source network node comprises a distributed unit (DU).

Example 31. The method of example 26, wherein the RAR window information comprises at least one of the following: a RAR window length; an indication of common search space (CSS) occasions within the RAR window, wherein the RAR may be received by the user device during the CSS occasions; an indication for the user device to resume data communication with the source cell within the RAR window after the RAR is received by the user device from the target cell; an indication of at least one user device-specific common search space (CSS) occasion, of a plurality of CSS occasions within the RAR window, where the RAR may be transmitted to the user device from the target cell; and/or an intermittent communication indication that instructs the user device to perform data communication with the source cell in one or more gaps between the CSS occasions within the RAR window.

Example 32. An apparatus comprising: at least one processor; and at least one memory including computer program code; the at least one memory and the computer program code configured to, with the at least one processor, cause the apparatus at least to perform the method of any of examples 26-31.

Example 33. A non-transitory computer-readable storage medium comprising instructions stored thereon that, when executed by at least one processor, are configured to cause a computing system to perform the method of any of examples 26-31.

Example 34. An apparatus comprising means for performing the method of any of examples 26-31.

Example 35. An apparatus comprising: at least one processor; and at least one memory including computer program code; the at least one memory and the computer program code configured to, with the at least one processor, cause the apparatus at least to: receive, by a source network node associated with a source cell for a user device, a random access response (RAR) window information for a RAR window for a target cell associated with a target network node, the RAR window information including at least one of: an indication for the source network node to resume data communication with the user device after a RAR is received by the user device from the target cell within the RAR window, or an indication for the source network node to perform the data communication with the user device between at least two common search space (CSS) occasions within the RAR window; forward, by the source network node to the user device, the RAR window information; pause, by the source network node, the data communication with the source cell; and perform, by the source network node, the data communication with the user device based on the RAR window information.

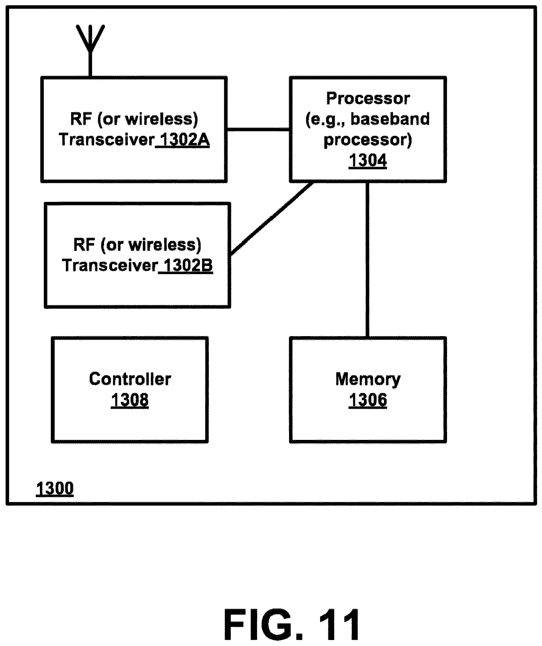

FIG. 11 is a block diagram of a wireless station or node (e.g., UE, user device, AP, BS, eNB, gNB, RAN node, network node, TRP, or other node) 1300 according to an example embodiment. The wireless station 1300 may include, for example, one or more (e.g., two as shown in FIG. 8) RF (radio frequency) or wireless transceivers 1302A, 1302B, where each wireless transceiver includes a transmitter to transmit signals and a receiver to receive signals. The wireless station also includes a processor or control unit/entity (controller) 1304 to execute instructions or software and control transmission and receptions of signals, and a memory 1306 to store data and/or instructions.

Processor 1304 may also make decisions or determinations, generate frames, packets or messages for transmission, decode received frames or messages for further processing, and other tasks or functions described herein. Processor 1304, which may be a baseband processor, for example, may generate messages, packets, frames or other signals for transmission via wireless transceiver 1302 (1302A or 1302B). Processor 1304 may control transmission of signals or messages over a wireless network, and may control the reception of signals or messages, etc., via a wireless network (e.g., after being down-converted by wireless transceiver 1302, for example). Processor 1304 may be programmable and capable of executing software or other instructions stored in memory or on other computer media to perform the various tasks and functions described above, such as one or more of the tasks or methods described above. Processor 1304 may be (or may include), for example, hardware, programmable logic, a programmable processor that executes software or firmware, and/or any combination of these. Using other terminology, processor 1304 and transceiver 1302 together may be considered as a wireless transmitter/receiver system, for example.

In addition, referring to FIG. 11, a controller (or processor) 1308 may execute software and instructions, and may provide overall control for the station 1300, and may provide control for other systems not shown in FIG. 11, such as controlling input/output devices (e.g., display, keypad), and/or may execute software for one or more applications that may be provided on wireless station 1300, such as, for example, an email program, audio/video applications, a word processor, a Voice over IP application, or other application or software.

In addition, a storage medium may be provided that includes stored instructions, which when executed by a controller or processor may result in the processor 1304, or other controller or processor, performing one or more of the functions or tasks described above.

According to another example embodiment, RF or wireless transceiver(s) 1302A/1302B may receive signals or data and/or transmit or send signals or data. Processor 1304 (and possibly transceivers 1302A/1302B) may control the RF or wireless transceiver 1302A or 1302B to receive, send, broadcast or transmit signals or data.

Embodiments of the various techniques described herein may be implemented in digital electronic circuitry, or in computer hardware, firmware, software, or in combinations of them. Embodiments may be implemented as a computer program product, i.e., a computer program tangibly embodied in an information carrier, e.g., in a machine-readable storage device or in a propagated signal, for execution by, or to control the operation of, a data processing apparatus, e.g., a programmable processor, a computer, or multiple computers. Embodiments may also be provided on a computer readable medium or computer readable storage medium, which may be a non-transitory medium. Embodiments of the various techniques may also include embodiments provided via transitory signals or media, and/or programs and/or software embodiments that are downloadable via the Internet or other network(s), either wired networks and/or wireless networks. In addition, embodiments may be provided via machine type communications (MTC), and also via an Internet of Things (IOT).

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer, or it may be distributed amongst a number of computers.

Furthermore, embodiments of the various techniques described herein may use a cyber-physical system (CPS) (a system of collaborating computational elements controlling physical entities). CPS may enable the embodiment and exploitation of massive amounts of interconnected ICT devices (sensors, actuators, processors microcontrollers, ...) embedded in physical objects at different locations. Mobile cyber physical systems, in which the physical system in question has inherent mobility, are a subcategory of cyber-physical systems. Examples of mobile physical systems include mobile robotics and electronics transported by humans or animals. The rise in popularity of smartphones has increased interest in the area of mobile cyber-physical systems. Therefore, various embodiments of techniques described herein may be provided via one or more of these technologies.

A computer program, such as the computer program(s) described above, can be written in any form of programming language, including compiled or interpreted languages, and can be deployed in any form, including as a stand-alone program or as a module, component, subroutine, or other unit or part of it suitable for use in a computing environment. A computer program can be deployed to be executed on one computer or on multiple computers at one site or distributed across multiple sites and interconnected by a communication network.

Method steps may be performed by one or more programmable processors executing a computer program or computer program portions to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer, chip or chipset. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

To provide for interaction with a user, embodiments may be implemented on a computer having a display device, e.g., a cathode ray tube (CRT) or liquid crystal display (LCD) monitor, for displaying information to the user and a user interface, such as a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments may be implemented in a computing system that includes a back-end component, e.g., as a data server, or that includes a middleware component, e.g., an application server, or that includes a front-end component, e.g., a client computer having a graphical user interface or a Web browser through which a user can interact with an embodiment, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described embodiments have been illustrated as described herein, many modifications, substitutions, changes and equivalents will now occur to those skilled in the art. It is, therefore, to be understood that the appended claims are intended to cover all such modifications and changes as fall within the true spirit of the various embodiments.

## Claims

1. A method comprising:
receiving, by a user device from a network node, a random access response (RAR) window information for a RAR window for the target cell, the RAR window information including at least one of: an indication for the user device to resume data communication with a source cell after a RAR is received by the user device from the target cell within the RAR window, or an indication for the user device to perform the data communication with the source cell between at least two common search space (CSS) occasions within the RAR window;
pausing, by the user device, the data communication with the source cell; and
performing, by the user device, the data communication with the source cell based on the RAR window information.

2. The method of claim 1, further comprising receiving, by the user device from the network node, a timing advance acquisition request for the target cell;
wherein the pausing, by the user device, the data communication with the source cell comprises:
pausing, based on the timing advance acquisition request for the target cell,
the data communication with the source cell to allow the user device to monitor one or more CSS occasions of the at least two CSS occasions for the RAR from the target cell.

3. The method of any of claims 1-2, wherein the RAR window information further comprises a RAR window length of the RAR window for the target cell.

4. The method of any of claims 1-3, wherein the RAR window information comprises the indication for the user device to resume the data communication with the source cell after the RAR is received by the user device from the target cell within the RAR window;
the method comprising:
receiving, by the user device, the RAR from the target cell; and
the performing the data communication comprising resuming, by the user device, the data communication with the source cell after the RAR is received by the user device from the target cell.

5. The method of any of claims 1-4, wherein the RAR window information comprises the indication for the user device to perform the data communication with the source cell between at least two common search space (CSS) occasions where the user device may receive the RAR from the target cell;
the performing the data communication comprising:
performing, by the user device, the data communication with the source cell in a gap between the two CSS occasions within the RAR window.

6. The method of any of claims 1-5, wherein the RAR window information for the RAR window for the target cell is received by the user device via a radio resource control (RRC) message or the timing advance acquisition request.

7. The method of any of claims 1-6, wherein the RAR window information comprises information indicating at least one common search space (CSS) occasion within the RAR window where the RAR will be transmitted to the user device from the target cell;
the method comprising:
receiving, by the user device from the target cell via a CSS occasion of the at least one CSS occasion within the RAR window, the RAR from the target cell.

8. The method of any of claims 1-7, wherein the RAR window information comprises information indicating at least one user device-specific common search space (CSS) occasion, of a plurality of CSS occasions, within the RAR window where the RAR may be transmitted to the user device from the target cell.

9. The method of any of claims 1-8, wherein the RAR window information comprises:
information indicating at least two common search space (CSS) occasions within the RAR window for the target cell, within which the RAR may be transmitted to the user device; and
an intermittent or CSS gap communication indication that instructs the user device to perform the data communication with the source cell in one or more gaps between the at least two CSS occasions within the RAR window; and
the performing the data communication comprising performing at least one of transmitting data to or receiving data from the source cell within a gap between the at least two CSS occasions within the RAR window.

10. The method of claim 1, further comprising:
receiving, by the user device from the target cell, the RAR;
transmitting, by the user device to the source cell, an indication that the RAR has been received by the user device from the target cell.

11. The method of claim 1, wherein the RAR window information comprises the indication for the user device to resume the data communication with the source cell after the RAR is received by the user device from the target cell within the RAR window;
the method comprising:
receiving, by the user device, the RAR from the target cell;
transmitting, by the user device to the source cell, an indication that the RAR has been received by the user device from the target cell; and
the performing the data communication comprising resuming, by the user device, the data communication with the source cell after the RAR has been received by the user device and based on the user device transmitting the indication to the source cell indicating that the RAR has been received by the user device.

12. The method of claim 1, wherein the RAR window information comprises at least one of the following:
a RAR window length;
an indication of common search space (CSS) occasions within the RAR window, wherein the RAR may be received by the user device during a CSS occasion;
an indication for the user device to resume data communication with the source cell within the RAR window after the RAR is received by the user device from the target cell;
an indication of at least one user device-specific common search space (CSS) occasion, of a plurality of CSS occasions within the RAR window, where the RAR will may be transmitted to the user device from the target cell; and/or
an intermittent communication indication that instructs the user device to perform data communication with the source cell in one or more gaps between the CSS occasions within the RAR window.

13. An apparatus comprising:
at least one processor; and
at least one memory including computer program code;
the at least one memory and the computer program code configured to, with the at least one processor, cause the apparatus at least to:
receive, by a user device from a network node, a random access response (RAR) window information for a RAR window for the target cell, the RAR window information including at least one of: an indication for the user device to resume data communication with a source cell after a RAR is received by the user device from the target cell within the RAR window, or an indication for the user device to perform the data communication with the source cell between at least two common search space (CSS) occasions within the RAR window;
pause, by the user device, the data communication with the source cell; and
perform, by the user device, the data communication with the source cell based on the RAR window information.

14. A method comprising:
receiving, by a source network node associated with a source cell for a user device, a random access response (RAR) window information for a RAR window for a target cell associated with a target network node, the RAR window information including at least one of: an indication for the source network node to resume data communication with the user device after a RAR is received by the user device from the target cell within the RAR window, or an indication for the source network node to perform the data communication with the user device between at least two common search space (CSS) occasions within the RAR window;
forwarding, by the source network node to the user device, the RAR window information;
pausing, by the source network node, the data communication with the source cell;
and
performing, by the source network node, the data communication with the user device based on the RAR window information.

15. An apparatus comprising:
at least one processor; and
at least one memory including computer program code;
the at least one memory and the computer program code configured to, with the at least one processor, cause the apparatus at least to:
receive, by a source network node associated with a source cell for a user device, a random access response (RAR) window information for a RAR window for a target cell associated with a target network node, the RAR window information including at least one of: an indication for the source network node to resume data communication with the user device after a RAR is received by the user device from the target cell within the RAR window, or an indication for the source network node to perform the data communication with the user device between at least two common search space (CSS) occasions within the RAR window;
forward, by the source network node to the user device, the RAR window information;
pause, by the source network node, the data communication with the source cell; and
perform, by the source network node, the data communication with the user device based on the RAR window information.
